Europäisches Patentamt

European Patent Office

Office européen des brevets

(11) Numéro de publication: **0 157 826**
**B1**

(12) FASCICULE DE BREVET EUROPEEN

(45) Date de publication du fascicule du brevet: 14.03.90

(51) Int. Cl.⁵: **G 11 B 23/02, G 11 B 33/04**

(21) Numéro de dépôt: 84903553.0

(22) Date de dépôt: 28.09.84

(86) Numéro de dépôt international:
PCT/FR84/00215

(87) Numéro de publication internationale:
WO 85/01608 11.04.85 Gazette 85/09

(54) **DISPOSITIF DE RANGEMENT MODULABLE POUR DISQUES COMPACTS, CASSETTES D'ENREGISTREMENT MAGNETIQUE ET ANALOGUES.**

(30) Priorité: 29.09.83 FR 8315539

(43) Date de publication de la demande:
16.10.85 Bulletin 85/42

(45) Mention de la délivrance du brevet:
14.03.90 Bulletin 90/11

(84) Etats contractants désignés:
AT BE CH DE FR GB LI LU NL SE

(56) Documents cités:
EP-A-0 015 398
FR-A-2 176 944
FR-A-2 301 892
FR-A-2 317 184
FR-A-2 387 493
FR-A-2 506 492
GB-A-2 017 050
GB-A-2 021 072
US-A-2 868 606
US-A-3 862 787
US-A-4 270 817

(73) Titulaire: FOUASSIER, Jean Pierre
10, rue de Strasbourg
F-94230 Cachan (FR)

(72) Inventeur: FOUASSIER, Jean Pierre
10, rue de Strasbourg
F-94230 Cachan (FR)

(74) Mandataire: Combe, André et al
CABINET BEAU DE LOMENIE 55, rue
d'Amsterdam
F-75008 Paris (FR)

Courier Press, Leamington Spa, England.

## Description

L'invention concerne un dispositif pour ranger les cassettes d'enregistrement magnétique, les disques "compacts" (c'est-à-dire pour lecture laser) et analogues.

On a déjà décrit, notamment dans le brevet anglais 2.021.072, des dispositifs de rangement pour cassettes constitués essentiellement d'un coffret partagé en deux chambres de rangement par des parois centrales solidaires dudit coffret, lesdites parois centrales et les faces intérieures latérales dudit coffret portant des guides convenablement espacés.

Un tel dispositif est difficile à réaliser en grande série du fait des formes compliquées à obtenir lors, par exemple d'un moulage.

US—A—2 868 606 décrit un dispositif de rangement pour microsillons comportant une boîte et des parois et des plaques de séparation mobiles.

Il convient donc de réaliser un dispositif facile à produire industriellement, et présentant par ailleurs les avantages suivants:

On connît déjà un certain nombre de dispositifs de ce type mais aucun ne réunit tous les avantages de l'invention, qui sont:

—dispositif formé d'éléments séparés qui sont destinés à être insérés dans un coffret dont l'aspect extérieur peut être quelconque,

—possibilité de réaliser des "kits" (dispositif présenté en pièces séparées pour montage par l'utilisateur),

—le coffret étant quelconque, possibilité de réaliser des ensembles modulables,

—excellent verrouillage en position du contenu du coffret, ce qui permet une utilisation en voiture sans production de bruits désagréables pour les occupants du véhicule.

C'est là l'objet de la présent invention.

L'invention concerne donc un:

—dispositif de rangement et maintien en place, avec éjection mécanique, de disques compacts, cassettes d'enregistrement magnétique et analogues, comprenant

—un coffret (1) généralement cubique comportant une face formant plafond, une face formant plancher, une face formant fond, et deux faces latérales opposées, la dernière face dudit coffret étant ouverte.

caractérisé en ce qu'il comporte:

—deux pièces démontables (3) constituées d'une plaque plane portant sur l'une des faces des parties saillantes (4) déterminant entre elles des compartiments de rangement, la plaque étant sur au moins l'une des pièces (3) incisée dans chaque compartiment pour faire apparaître une languette élastique (5) terminée par une partie (6) en biseau, formant crochet de retenue vers l'intérieur;

—deux montants démontables (10) constitués d'une plaque de base (7) comportant des pièces saillantes (8) servant de support à des ressorts (9), et en ce que:

—les deux pièces (3) sont glissées dans le coffret grâce à quatre rainures (2) prévues à cet effet dans la face formant plafond et la face formant plancher, chaque pièce (3) une fois mise en place étant parallèle aux deux faces latérales et étant disposées de façon à ce que lesdites parties saillantes (4) soient face à face, chacune desdites pièces étant fixée au coffret par un système d'encliquetage.

—les deux montants (10) sont fixés sur la face formant fond du coffret de manière que chaque compartiment délimité par les parties saillantes (4) soit en regard de deux ressorts d'éjection, l'un porté par l'un et l'autre porté par l'autre desdits montants (10).

D'autres caractéristiques et avantages de l'invention apparaîtront mieux à la lecture de la description qui va suivre et en se référant au dessin annexé, sur lequel:

—la figure 1 représente une vue en perspective du dispositif complet selon l'invention;

—la figure 2 représente en perspective les pièces 3 et 10 selon l'invention (figures 2(a) et 2(b)) sorties de leur coffret;

—la figure 3 représente un mode préféré de création de modules.

Le dispositif selon l'invention se compose d'un coffret 1 ouvert dont deux faces opposées présentent sur leurs faces intérieures quatre rainures 2.

Ces rainures sont destinées à recevoir deux pièces 3 dont on complètera la fixation au coffret par un système d'encliquetage non représenté.

Il est essentiel, et là réside une originalité majeure de l'invention, qu'il subsiste un espace 11 entre chaque pièce 3 et la face en regard du coffret 1, cet espace étant tel qu'il autorise le pivotement classique de la patte 5 [terminée par la partie 6 formant crochet de retenue pour le disque compact (ou cassette, etc.) rangé dans le dispositif].

Il est tout à fait préférable que chaque crochet de retenue (6) présente une partie (6') située en retrait par rapport à l'extrémité avant des parties saillantes (4), afin d'assurer un meilleur guidage de la cassette, du disque, etc... lors de la mise en place dans le coffret, évitant ainsi que la force de rappel de la patte (5, 6) ne perturbe l'exactitude recherchée de la mise en place.

Chaque pièce 3 comporte des parties saillantes 4 espacées entre elles de façon à former des compartiments séparés adaptés aux dimensions des disques, cassettes, etc.

Chaque pièce 3 comporte des parties saillantes en regard, mais il n'est pas nécessaire que chaque pièce 3 comporte les systèmes élastiques 5, 6. Cela peut même présenter l'inconvénient d'une double manipulation.

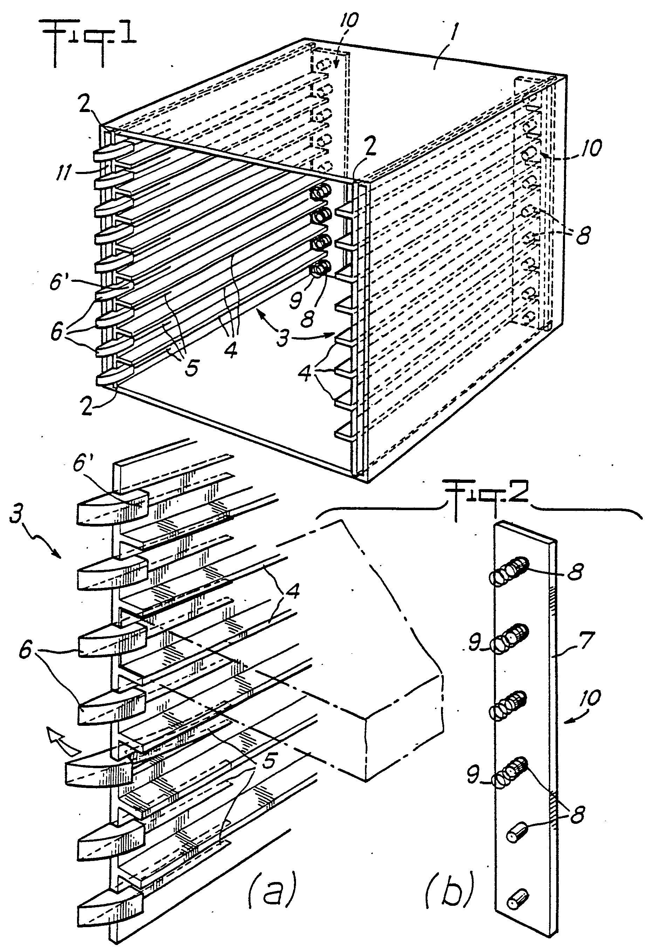

Le dispositif selon l'invention comporte encore deux pièces 10 destinées à être fixées (encliquetage, collage, etc.) au fond du coffret, comme représenté sur la figure 1.

Chaque pièce 10 est formée d'une base 7 comportant des pièces saillantes 8 destinées à servir de support à des ressorts 9 qui seront simplement "enfilés" sur ces pièces et fixés par collage ou autre.

On comprendra que chaque ressort devra se trouver au milieu de l'intervalle existant entre deux parties saillantes 4 voisines.

Le disque est alors glissé dans l'un des compartiments. Il écarte de lui-même la languette élastique 5 du fait de la forme biseautée de la partie 6 puis, arrivé en position, les ressorts sont comprimés, tandis que le crochet 6 se rabat. Le disque est alors positionné sans jeu possible. Si l'on écarte la partie 6, le disque est éjecté.

On notera que, grâce à l'espace latéral 11, le mouvement de la pièce 5, 6 s'effectue à l'intérieur du coffret 1. On peut donc juxtaposer sans difficulté plusieurs coffrets. L'invention conduit donc à la possibilité de réaliser des éléments modulables.

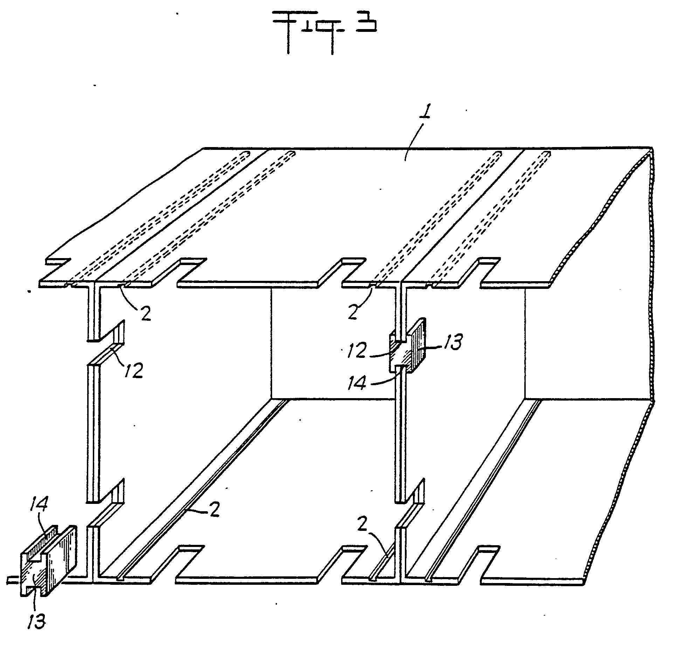

A cet égard, un système d'assemblage de modules est représenté sur la figure 3 annexée.

Les faces (1) de chaque coffret à assembler comportent chacune, du côté de l'ouverture du coffret, des encoches 12 (de préférence deux, sur le bord de chaque face) dimensionnées de manière à recevoir une clé 13 dont la section droite est en "H". Chaque clé sera elle-même dimensionnée de manière à pouvoir être introduite dans l'encoche double formée par la juxtaposition exacte de deux faces (1) et la largeur des rainures (14) pratiquées dans la clé sera égale à deux fois l'épaisseur de la paroi (1). On peut ainsi assembler de manière particulièrement commode, dans toutes les directions, autant de coffrets qu'on le souhaite. Les clés pourront être réalisées dans un matériau présentant avec le matériau du coffret un coefficient de frottement permettant d'assembler les coffrets commodément et de manière sûre.

Les pièces 3, 7, 8 peuvent être fabriquées sans aucune difficulté par moulage d'une matière plastique.

Le coffret peut être quelconque hormis la présence des quatre rainures 2 ou un système analogue. Ce coffret peut donc pour la première fois être réalisé en bois, adopter un style particulier, etc.

L'un des grands avantages de l'invention est donc de permettre une fabrication séparée des différentes pièces, et leur mise en place dans un coffret adapté aux goûts et aux besoins divers des utilisateurs.

## Revendications

1. Dispositif de rangement et maintien en place, avec éjection mécanique, de disques compacts, cassettes d'enregistrement magnétique et analogues, comprenant
—un coffret (1) généralement cubique comportant une face formant plafond, une face formant plancher, une face formant fond, et deux faces latérales opposées, la dernière face dudit coffret étant ouverte,
caractérisé en ce qu'il comporte:
—deux pièces démontables (3) constituées d'une plaque plane portant sur l'une des faces des parties saillantes (4) déterminant entre elles des compartiments de rangement, la plaque étant sur au moins l'une des pièces (3) incisée dans chaque compartiment pour faire apparaître une languette élastique (5) terminée par une partie (6) en biseau, formant crochet de retenue vers l'intérieur;
—deux montants démontables (10) constitués d'une plaque de base (7) comportant des pièces saillantes (8) servant de support à des ressorts (9), et en ce que:
—les deux pièces (3) sont glissées dans le coffret grâce à quatre rainures (2) prévues à cet effet dans la face formant plafond et la face formant plancher, chaque pièce (3) une fois mise en place étant parallèle aux deux faces latérales et étant disposées de façon à ce que lesdites parties saillantes (4) soient face à face, chacune desdites pièces étant fixée au coffret par un système d'encliquetage,
—les deux montants (10) sont fixés sur la face formant fond du coffret de manière que chaque compartiment délimité par les parties saillantes (4) soit en regard de deux ressorts d'éjection, l'un porté par l'une et l'autre porté par l'autre desdits montants (10),
—un espace (11) est ménagé de chaque côté du coffret entre lesdites rainures et les faces adjacentes dudit coffret, pour permettre le pivotement élastique de la languette (5, 6).

2. Dispositif selon la revendication 1, caractérisé en ce que la partie en biseau (6) comporte une partie (6') située en retrait, vers l'intérieur du coffret, par rapport aux extrémités avant des parties saillantes (4).

3. Dispositif selon la revendication 1, caractérisé en ce que chaque face du coffret (1), présente sur son bord encadrant l'ouverture du coffret au moins une et de préférence deux encoches (12) dimensionnées pour recevoir une clé (13) démontable de forme générale parallélépipédique et de section droite en "H", les rainures (14) de chaque clé étant de largeur double de l'épaisseur de la parois, les encoches et clés coopérant pour assurer une liaison suffisamment, solide entre deux ou plusieurs coffrets exactement juxtaposés, deux à deux.

## Patentansprüche

1. Vorrichtung zum Einordnen und Aufbewahren von CDs, Magnetspeicherkassetten und dgl. mit mechanischem Auswurf, umfassend
—ein im allgemeinen kubisches Gehäuse (1) mit einer die Decke bildenden Fläche, einer den Boden bildenden Fläche, einer die Rückwand bildenden Fläche und zwei gegenüberliegenden Seitenflächen, wobei eine letzte Seite des Gehäuses offen ist, dadurch gekennzeichnet, daß sie umfaßt:
—zwei demontierbare Stücke (3) bestehend aus einer planen Platte, die an einer Seite vorspringende Teile (4) aufweist, welche zwischen ihnen Abteile zum Einordnen begrenzen, wobei die Platte an mindestens einem der Stücke (3) in jedem Abteil eingeschnitten ist, um eine elastische Zunge (5) zu bilden, die in einem abgeschrägten, einen Halterungshaken nach Innen zu bildenden Teil (6) endet;

—zwei demontierbare Ständer (10) bestehend aus einer Basisplatte (7) mit vorspringenden Stükken (8), die als Träger für Federn (9) dienen, und daß:

—die beiden Stücke (3) in zu diesem Zweck in der die Decke bildenden Fläche und der den Boden bildenden Fläche vorgesehenen vier Rillen (2) im Gehäuse gleiten, wobei jedes Stück (3), sobald es in Lage gebracht ist, parallel zu den beiden Seitenflächen verläuft und derart angeordnet ist, daß die vorspringenden Teile (4) Seite an Seite liegen, wobei jedes der Stücke mit einem Klinkenmechanismus am Gehäuse fixiert ist,

—die beiden Ständer (10) an der die Rückwand des Gehäuses bildenden Fläche derart befestigt sind, daß jedes von den vorspringenden Teilen (4) begrenzte Abteil gegenüber zwei Auswurffedern angeordnet ist, von denen eine an dem einen Träger und die andere an dem anderen Träger (10) vorgesehen ist,

—ein Raum (11) auf jeder Seite des Gehäuses zwischen den Rillen und den angrenzenden Flächen des Gehäuses zur Ermöglichung der elastischen Schwenkbewegung der Zunge (5, 6) vorgesehen ist.

2. Vorrichtung nach Anspruch 1, dadurch gekennzeichnet, daß der abgeschrägte Teil (6) einen zum Inneren des Gehäuses in bezug auf die vorderen Enden der vorspringenden Teile (4) zurückspringend angeordneten Teil (6') umfaßt.

3. Vorrichtung nach Anspruch 1, dadurch gekennzeichnet, daß jede Fläche des Gehäuses (1) an ihrem die Öffnung des Gehäuses umrahmenden Rand mindestens eine, vorzugsweise zwei, Kerbe(n) (12) aufweist, die zur Aufnahme eines abnehmbaren Schlüssels (13) von im allgemeinen parallelepidischer Form und H-förmigem Querschnitt dimensioniert sind, wobei die Rillen (14) jedes Schlüssels eine Breite doppelt so groß wie die Dicke der Wand aufweisen und die Kerben und Schlüssel zur Gewährleistung einer ausreichend festen Verbindung zwischen zwei oder mehreren Gehäusen, von denen immer zwei genau nebeneinander angeordnet sind, zusammenwirken.

**Claims**

1. Device for storing and keeping in position, with mechanical ejection, compact discs, magnetic recording cassettes and the like, comprising:

—a generally cubic case (1) comprising one face forming top wall, one face forming bottom wall, one face forming back wall and two opposite side faces, the last face of the case being open, characterized in that it comprises:

—two dismountable parts (3) constituted of a flat plate provided on one of its faces with projecting portions (4) defining storing compartments between them, the plate being on at least one of the parts (3) slit in each compartment to create an elastic tongue (5) ending into a bevelled part (6) extending inwardly to form a retaining hook;

—two dismountable strut plates (10) constituted of a base plate (7) comprising projecting pieces (8) serving as supports for springs (9), and in that:

—the two parts (3) are inserted in the case by way of four grooves (2) provided to this effect in the face forming top wall and in the face forming bottom wall, each part (3), once in position, being parallel to the two side faces and being arranged so that said projecting portions (4) are in facing relationship, each one of said parts being fastened to the case by a force-fitting system,

—the two strut plates (10) are fixed on the face forming the back wall of the case so that each compartment is defined by the projecting portions (4), namely opposite the two ejection springs, one carried by one of said strut plates (10) and the other carried by the other strut plate (10),

—a space (11) is provided on each side of the case between said grooves and the adjacent faces of the case, to allow the elastic pivoting of the tongue (5, 6).

2. Device according to claim 1, characterized in that the bevelled part (6) comprises a portion (6') which is offset, inwards of the case, with respect to the front ends of the projecting portions (4).

3. Device according to claim 1, characterized in that each face of the case (1) is provided on its edge bordering the opening of the case with at least one and preferably two notches (12) dimensioned so as to receive a removable key (13) of general parallelepipedal shape and H-cross-section, the width of the grooves (14) of each key being twice the thickness of the walls, the notches and keys cooperating to ensure a strong enough connection between two or more cases, juxtaposed exactly in pairs.

EP 0 157 826 B1

Fig.1

Fig.2

(a)                    (b)

1

Fig. 3

1

2

2

12

13

12

14

14

13

2

2

2